# FASCICULE DE BREVET EUROPEEN

(11) **EP 0 694 749 B1**
(45) Date de publication et mention de la délivrance du brevet: **16.12.1998**
(21) Numéro de dépôt: 95401763.8
(22) Date de dépôt: 25.07.1995
(51) Int. Cl.: F28D 13/00, F28D 7/16, B01J 8/18, F22B 31/00

(54) **Dispositif de refroidissement de particules solides en sortie d'un agencement de traitement**
Feststoffpartikel-Kühlungseinrichtung am Ausgang einer Verarbeitungsanordnung
Solid particle cooling device at the outlet of a treatment arrangement

(30) Priorité: 28.07.1994 FR 9409364
(43) Date de publication de la demande: 31.01.1996
(73) Titulaire: GEC ALSTHOM Stein Industrie, 78140 Velizy-Villacoublay (FR)
(72) Inventeur: Semedard, Jean-Claude, F-75014 Paris (FR); Suraniti, Silvestre, F-75014 Paris (FR); Morin, Jean-Xavier, F-45170 Neuville Aux Bois (FR)
(74) Mandataire: Gosse, Michel

(56) Documents cités:
- EP-A- 0 567 167
- CH-A- 312 376
- DE-A- 3 345 235
- FR-A- 2 182 009
- GB-A- 1 525 222
- US-A- 3 264 751
- US-A- 3 672 069

## Description

La présente invention se rapporte à un dispositif de refroidissement de particules solides en sortie d'un agencement de traitement comportant une conduite d'évacuation inclinée vers le bas, d'axe longitudinal x-x et pourvue d'un matériau réfractaire, recevant en partie haute les particules solides et associée à un agencement de refroidissement comprenant dans un bac de réception un ensemble de tubes d'échange de chaleur où circule un fluide caloporteur et un ensemble d'aération permettant l'écoulement des particules solides.

Un tel dispositif connu présente en sortie de la conduite d'évacuation un bac ou plusieurs bacs de réception des particules solides ou cendres équipé d'un ensemble de tubes d'échange de chaleur et d'un ensemble de fluidisation des cendres et où les cendres sont refroidies pour être ensuite récupérées par une gaine de sortie en aval du bac. Un tel bac forme un lit fluidisé extérieur au foyer qui présente un certain encombrement et un certain coût.

Le document FR-A-2 353 332 décrit un tel dispositif.

Le document FR-A-2 182 009 décrit également un appareil de traitement de matériau en lit fluidisé à circulation horizontale.

De plus, un tel dispositif connu pose les problèmes suivants. Le débit de particules solides imposé passe dans les différents bacs fluidisés par déversement au-dessus de parois de retenue ou déversoirs plus hauts que les ensembles de tubes d'échange. Plus le débit de particules est important et plus le niveau au-dessus des déversoirs est élevé. Il existe donc une limitation au débit de particules susceptible d'être accepté par un tel dispositif d'un encombrement donné ou réciproquement pour un débit donné, il existe une section de passage minimale au-dessous de laquelle le débit ne peut pas passer.

Par ailleurs, dans le dispositif connu, les vitesses axiales des particules au passage des déversoirs sont importantes lorsque les débits sont importants de sorte que des risques d'érosion des tubes d'échange peuvent apparaître.

La présente invention résout ces problèmes avec les caractéristiques de la revendication 1. Elle permet une réduction notable de l'encombrement et du coût dans le cas où elle est utilisée en remplacement d'un dispositif de refroidissement connu.

Par ailleurs, par exemple dans les chaudières de lits fluidisés circulants, il est toujours recherché d'augmenter la récupération de chaleur afin d'améliorer la puissance de la chaudière. La chaleur est transmise à un circuit eau-vapeur dans le foyer, dans la chaudière de récupération des fumées et dans des lits extérieurs par les particules solides en circulation. Pour augmenter la puissance de ces chaudières, les besoins d'échange thermique dans les lits extérieurs deviennent de plus en plus importants et conduisent à des tailles et à un nombre de lits extérieurs qui peuvent devenir rédhibitoires quant au coût et à l'encombrement.

L'invention propose une solution à ce problème en réalisant des échangeurs complémentaires intégrés à des conduites de passage de particules solides ou de cendres, par exemple en amont ou en aval de lits extérieurs qui peuvent ainsi être de capacité inférieure.

Pour ce faire, conformément à l'invention, le bac de réception est constitué par ladite conduite inclinée d'au moins 5 degrés par rapport à un plan horizontal.

Ainsi sont exploitées simultanément les fonctions de transport et de refroidissement de la conduite.

De préférence ladite conduite est inclinée de 5 à 20 degrés.

Selon un mode de réalisation préféré, l'ensemble de tubes d'échange est constitué de tubes essentiellement parallèles à l'axe x-x disposés dans la conduite.

Les dispositifs de refroidissement connus permettent le transfert d'un flux de particules solides de l'ordre de 30 tonnes/h.m² calculé sur la section de passage du bac à lit fluidisé. Le dispositif conforme à l'invention permet le transfert d'un flux de 15 à 20 fois supérieur grâce à l'inclinaison de la conduite et à un écoulement en phase plus dense réglable grâce à l'ensemble d'aération. Un tel flux impose de limiter les obstacles qui seraient soumis à une érosion importante et qui diminueraient la section de passage. L'implantation de surfaces d'échange thermique malgré ces contraintes physiques est rendue possible grâce à la caractéristique ci-dessus.

Avantageusement, les tubes d'échange sont des tubes doubles concentriques, l'entrée et la sortie du fluide caloporteur étant situées d'un même côté de la conduite.

Sans autre obstacle que les tubes d'échange, les particules solides occupent dans la conduite un certain volume en partie basse dépendant de la pente de la conduite et du débit de particules. En fonction de la surface d'échange recherchée et donc de la hauteur de l'ensemble de tubes, il peut être nécessaire de créer un obstacle en aval de cet ensemble de tubes de façon à former une paroi de retenue ou déversoir obligeant le flux de particules à noyer l'ensemble de tubes d'échange.

Pour ce faire, ladite conduite peut être équipée d'une paroi de retenue des particules solides située en aval de l'ensemble de tubes d'échange.

Avantageusement, ladite paroi de retenue est transversale et extractible.

Selon une caractéristique constitutive particulière, ladite paroi de retenue est constituée d'éléments allongés superposés et amovibles.

L'ensemble d'aération comprend des buses traversant la conduite dans sa partie inférieure et alimentées par un collecteur compartimenté situé sous la conduite.

L'invention est décrite ci-après plus en détail à l'aide de figures ne représentant qu'un mode de réalisation préféré de l'invention.

La figure 1 est une vue en coupe longitudinale d'un dispositif de refroidissement conforme à l'invention.

La figure 2 est une vue en coupe selon II-II de la figure 1.

La figure 3 est une vue en coupe selon III-III de la figure 1.

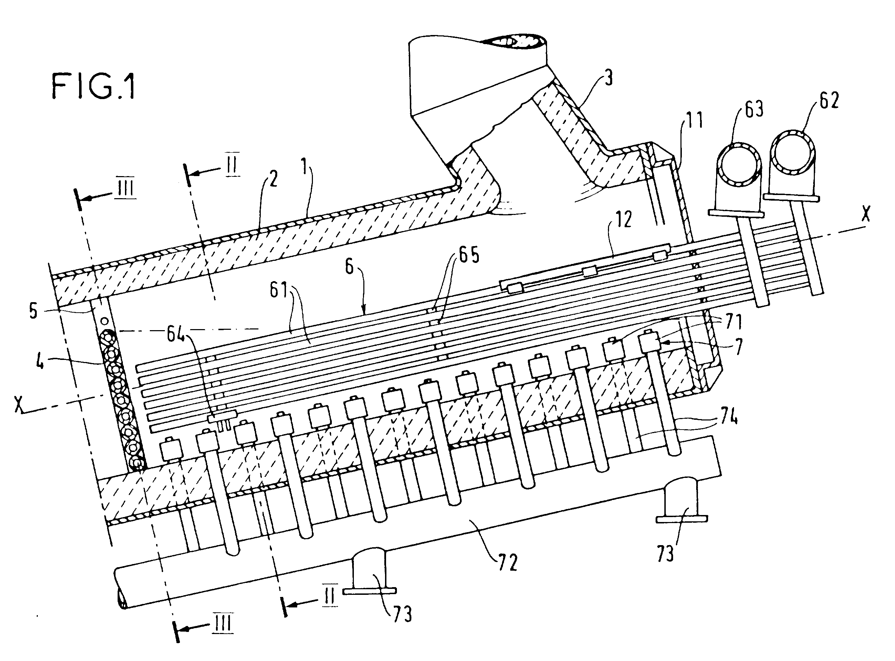

Comme représenté sur la figure 1, le dispositif de refroidissement conforme à l'invention comporte une conduite d'évacuation 1 inclinée vers le bas d'un angle de 5 à 20 degrés par rapport à un plan horizontal, d'axe longitudinal x-x, pourvue d'un revêtement réfractaire 2 assurant l'isolation thermique et la protection mécanique, recevant en partie haute par une gaine d'arrivée 3 des particules solides chaudes telles que des cendres provenant par exemple d'un foyer ou cyclone.

La conduite inclinée 1 est équipée d'un ensemble d'aération des particules solides 7 et d'une paroi transversale 4 de retenue des particules solides. Ainsi est formé à l'intérieur de la conduite 1 un bac de réception des particules solides entre la gaine d'entrée 3 et la paroi 4. Cette paroi 4 ne s'étend que sur une partie de la section interne de la conduite 1 et délimite en partie haute un passage 5 d'évacuation des particules.

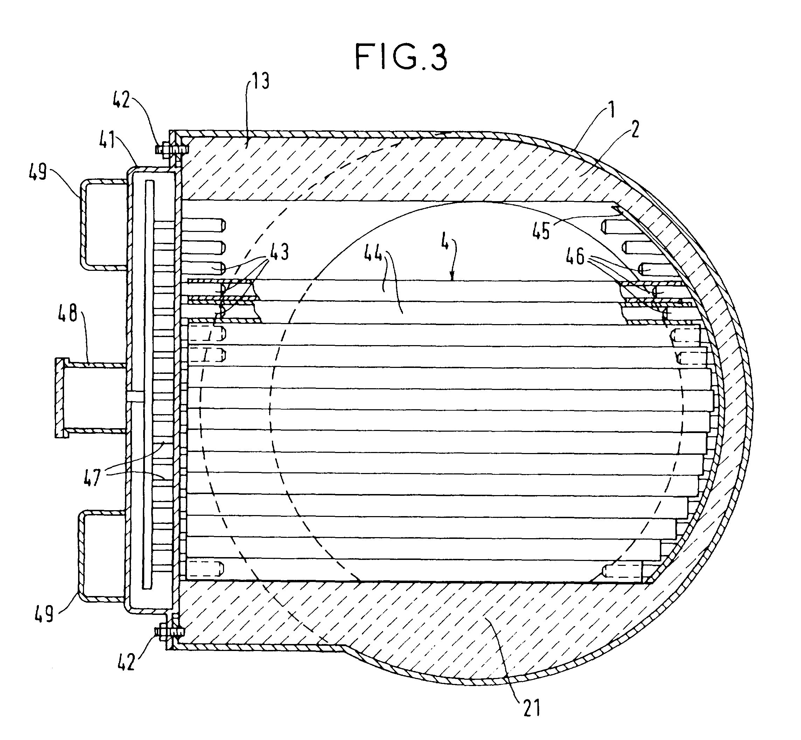

Cette paroi de retenue 4 est extractible et constituée d'éléments allongés superposés et amovibles comme il sera précisé plus loin à l'aide de la figure 3.

Dans ce bac de réception est disposé un agencement de refroidissement comprenant un ensemble de tubes d'échange de chaleur 6 où circule un fluide caloporteur.

L'ensemble de tubes d'échange 6 est constitué de tubes 61 essentiellement parallèles à l'axe x-x disposés en amont de la paroi transversale. Selon le mode de réalisation préféré, les tubes d'échange 61 sont des tubes doubles concentriques, l'entrée 62 et la sortie 63 du fluide étant situés d'un même côté de la conduite 1, à savoir sur le côté externe de la paroi frontale la plus haute 11 de la conduite 1. Avantageusement, cet ensemble de tubes 6 est solidaire de la paroi frontale 11 la plus haute de la conduite 1. Ainsi, par démontage de cette paroi 11, en arrêt de l'agencement de traitement, du foyer, du cyclone ou équivalent, l'ensemble de tubes d'échange 6 peut être démonté et être, si besoin est, entretenu ou réparé. Afin de maintenir en place cet ensemble de tubes ainsi disposé en porte-à-faux, un dispositif de maintien 64 est prévu à proximité de l'extrémité des tubes 61 proche de la paroi de retenue 4.

Les tubes d'échange thermique 61 supérieurs sont protégés par des boucliers métalliques 12 en face de la gaine d'entrée 3.

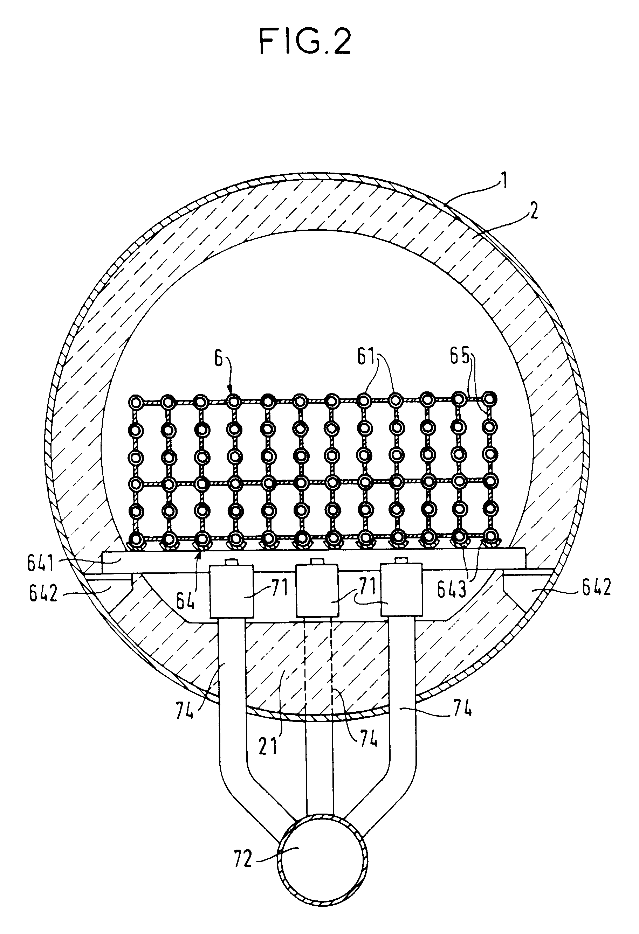

Cet ensemble de tubes d'échange 6 sera décrit ci-après plus en détail à l'aide de la figure 2.

L'ensemble d'aération 7 comprend des buses 71 traversant la conduite 1 dans la partie inférieure du bac de réception ainsi formé et alimentées par un collecteur 72 situé sous la conduite 1. Selon la longueur du bac de réception plusieurs collecteurs 72 peuvent être prévus. Dans ces collecteurs 72 est injecté le gaz d'aération par les entrées 73.

Comme visible sur la figure 2, l'ensemble de tubes d'échange 6 comporte un certain nombre de tubes 61 disposés parallèlement les uns aux autres et maintenus par des ailettes soudées 65 réparties transversalement et longitudinalement pour former un ensemble de tubes rigide. A proximité de l'extrémité en porte-à-faux est prévu un dispositif de maintien 64 constitué d'une traverse 641 fixée sur deux consoles 642 soudées à l'enveloppe métallique externe de la conduite 1 et supportant des berceaux 643 dans lesquels sont posés les tubes inférieurs de l'ensemble de tubes 6. Chaque tube d'échange 61 est constitué de deux tubes concentriques, dont l'interne est relié à l'entrée de fluide caloporteur 62 et l'externe à la sortie de fluide caloporteur 63, ces deux tubes étant en communication à leur extrémité proche de la paroi transversale 4.

Transversalement, plusieurs buses d'aération 71 peuvent être disposées en alignement, ces buses étant reliées au collecteur 72 par les conduites 74 d'alimentation en gaz. A l'intérieur de la conduite 1, ces conduites d'alimentation en gaz d'aération 74 sont noyées dans une surépaisseur 21 de matériau réfractaire.

La paroi de retenue 4 est particulièrement visible sur la figure 3.

A l'emplacement d'insertion de cette paroi 4, la conduite 1 présente une ouverture latérale délimitée par une partie de prolongement 13 afin que cette ouverture soit plane et rectangulaire. Dans cette ouverture est introduite la paroi 4 qui est de type tiroir extractible.

Elle comprend une partie externe 41 en forme de couvercle qui vient s'appliquer et se fixer sur la partie de prolongement 13 de la conduite 1 par exemple par des vis 42. Cette partie externe 41 supporte la partie interne qui constitue la paroi de retenue en soi. Pour ce faire, sur la partie externe 41 sont fixés des premiers embouts tubulaires 43 alignés sur toute la hauteur du volume intérieur de la conduite 1. Sur ces premiers embouts 43 sont emboîtés des tubes 44 constituant des éléments allongés superposés et amovibles. Ces tubes 44 sont de longueur telle qu'ils puissent être à leur autre extrémité emboîtés dans une pièce arrondie 45 supportant en correspondance des seconds embouts tubulaires 46 alignés sur toute la hauteur du volume intérieure de la conduite 1. Une fois un certain nombre de tubes 44 emboîtés sur la partie externe 41 et sur la pièce arrondie 45 et la paroi 4 insérée dans la conduite 1, la pièce arrondie 45 vient s'appliquer contre la paroi interne de la conduite 1.

Une fois la hauteur nécessaire de la paroi de retenue 4 déterminée, afin d'obliger le flux de particules à noyer l'ensemble de tubes d'échange, le nombre de tubes 44 à installer est déterminé. Eventuellement, le fonctionnement du dispositif étant arrêté et pour permettre un fonctionnement optimal du dispositif de refroidissement, la paroi transversale 4 est enlevée, le nombre de tubes 44 adéquat mis en place par emboîtement et la paroi 4 est de nouveau fixée.

Eventuellement, la partie externe 41 peut comporter des canaux 47 dans lesquels sont disposés des fils thermocouples permettant la détermination de la température à plusieurs niveaux de hauteur de la paroi de retenue 4. Elle peut comporter pour permettre cette détermination, une boîte externe accessible de connexion 48 ainsi que des moyens de préhension 49 pour le retrait et la mise en place de la paroi de retenue 4.

Un agencement de tubes 44 et d'embouts tubulaires 43 et 46 a été choisi, car de fabrication et de constitution relativement simple et fiable. Cependant, il peut être réalisé une telle paroi transversale de hauteur réglable avec des éléments superposés de forme différente.

## Revendications

1. Dispositif de refroidissement de particules solides en sortie d'un agencement de traitement comportant une conduite d'évacuation (1) inclinée vers le bas, d'axe longitudinal x-x, pourvue d'un matériau réfractaire (2), recevant en partie haute les particules solides et associée à un agencement de refroidissement comprenant dans un bac de réception un ensemble de tubes d'échange de chaleur (6) où circule un fluide caloporteur et un ensemble d'aération permettant l'écoulement des particules solides (7), caractérisé en ce que le bac de réception est constitué par ladite conduite (1) inclinée d'au moins 5 degrés par rapport à un plan horizontal.

2. Dispositif selon la revendication 1, caractérisé en ce que ladite conduite (1) est inclinée de 5 à 20 degrés.

3. Dispositif selon l'une des revendications précédentes, caractérisé en ce que l'ensemble de tubes d'échange (6) est constitué de tubes (61) essentiellemnt parallèles à l'axe x-x disposés dans la conduite (1).

4. Dispositif selon l'une des revendications précédentes, caractérisé en ce que ladite conduite est équipée d'une paroi de retenue (4) des particules solides située en aval de l'ensemble de tubes d'échange (6).

5. Dispositif selon la revendication 4, caractérisé en ce que ladite paroi de retenue (4) est transversale et extractible.

6. Dispositif selon la revendication 5, caractérisé en ce que ladite paroi de retenue (4) est constituée d'éléments (44) allongés superposés et amovibles.

7. Dispositif selon la revendication 3, caractérisé en ce que les tubes d'échange (61) sont des tubes doubles concentriques, l'entrée (62) et la sortie (63) du fluide caloporteur étant situées d'un même côté de la conduite (1).

8. Dispositif selon l'une des revendications précédentes, caractérisé en ce que l'ensemble d'aération (7) comprend des buses (71) traversant la conduite (1) dans sa partie inférieure et alimentées par un collecteur compartimenté (72) situé sous la conduite (1).

## Patentansprüche

1. Kühlvorrichtung für feste Teilchen am Ausgang einer Verarbeitungsanordnung, welche eine nach unten geneigte Entleerungsleitung (1) mit der Längsachse x-x aufweist, die mit einem feuerfesten Material (2) versehen ist, die im oberen Teil die festen Teilchen aufnimmt und mit einer Kühlanordnung, die in einem Aufnahmebehälter einen Röhrenaufbau (6) zum Wärmeaustausch, worin ein Kühlmittel zirkuliert, und einen Lüftungsaufbau umfasst, der das Strömen der festen Teilchen (7) gestattet, **dadurch gekennzeichnet**, dass der Aufnahmebehälter von der Leitung (1) gebildet wird, die in bezug auf die horizontale Ebene um mindestens 5 Grad geneigt ist.

2. Vorrichtung nach Anspruch 1, dadurch gekennzeichnet, dass die Leitung (1) um 5 bis 20 Grad geneigt ist.

3. Vorrichtung nach einem der vorhergehenden Ansprüche, dadurch gekennzeichnet, dass der Röhrenaufbau (6) zum Austausch von im wesentlichen zur Achse x-x parallelen Röhren (61) gebildet wird, die in der Leitung (1) angeordnet sind.

4. Vorrichtung nach einem der vorhergehenden Ansprüche, dadurch gekennzeichnet, dass die Leitung mit einer Rückhaltewand (4) für die festen Teilchen ausgestattet ist, die sich stromaufwärts des Röhrenaufbaus (6) zum Austausch befindet.

5. Vorrichtung nach Anspruch 4, dadurch gekennzeichnet, dass die Rückhaltewand (4) quer verläuft und herausziehbar ist.

6. Vorrichtung nach Anspruch 5, dadurch gekennzeichnet, dass die Rückhaltewand (4) aus gestreckten Elementen (44) besteht, die übereinander angeordnet und lösbar sind.

7. Vorrichtung nach Anspruch 3, dadurch gekennzeichnet, dass die Röhren (61) zum Austausch konzentrische Doppelröhren sind, wobei sich der Eingang (62) und der Ausgang (63) für das Kühlmedium auf derselben Seite der Leitung (1) befinden.

8. Vorrichtung nach einem der vorhergehenden Ansprüche, dadurch gekennzeichnet, dass der Lüftungsaufbau (7) Düsen (71) umfasst, die durch die Leitung (1) in ihrem unteren Teil hindurchgehen und von einem unter der Leitung (1) befindlichen, unterteilten Sammler gespeist werden.

## Claims

1. A cooling device for cooling solid particles output by a treatment facility, said cooling device comprising a removal pipe (1) which slopes downwards, which has a longitudinal axis x-x, which is lined with a refractory material (2), which receives the solid particles at its top, and which is associated with a cooling facility comprising, in a particle-receiving tank, a set of heat-exchange tubes (6) through which a cooling fluid flows and an air-feed assembly (7) enabling the solid particles to flow, said cooling device being characterised in that the particle-receiving tank is constituted by said pipe (1) which slopes at at least 5 degrees relative to a horizontal plane.

2. A device according to claim 1, characterised in that said pipe (1) slopes at an angle in the range 5 degrees to 20 degrees.

3. A device according to either of the preceding claims, characterised in that the set of heat-exchange tubes (6) is constituted by tubes (61) that are disposed essentially parallel to axis x-x in the pipe (1).

4. A device according to any preceding claim, characterised in that said pipe is provided with a retaining wall (4) for retaining solid particles, which wall is situated downstream from the set of heat-exchange tubes (6).

5. A device according to claim 4, characterised in that said retaining wall (4) is a transverse wall that is extractable.

6. A device according to claim 5, characterised in that said retaining wall (4) is made up of superposed elongate elements (44) that are removable.

7. A device according to claim 3, characterised in that the heat-exchange tubes (61) are coaxial pairs of tubes, with both the inlet (62) and the outlet (63) for the cooling fluid being situated at the same end of the pipe (1).

8. A device according to any preceding claim, characterised in that the air-feed assembly (7) comprises nozzles (71) passing through the bottom of the pipe (1) and fed via a compartmentalised manifold (72) situated under the pipe (1).
